# EUROPEAN PATENT SPECIFICATION

(11) **EP 1 854 601 B1**
(45) Date of publication and mention of the grant of the patent: **29.07.2009**
(21) Application number: 07102601.7
(22) Date of filing: 16.02.2007
(51) Int. Cl.: B27C 9/00, B23Q 7/10, B27B 31/00, B27B 31/08, B65G 59/02

(54) **Feeding unit for panels of wood or the like and method**
Zuführeinheit für Paneele aus Holz oder dergleichen und Verfahren
Unité d'alimentation de panneaux en bois ou similaire et procédé

(30) Priority: 11.05.2006 IT BO20060354
(43) Date of publication of application: 14.11.2007
(73) Proprietor: BIESSE S.p.A., 61100 Pesaro (IT)
(72) Inventor: Bernardi, Paolo, 47841 Cattolica (IT)
(74) Representative: Jorio, Paolo

(56) References cited:
- EP-A- 0 266 449
- DE-A1- 4 320 397
- US-A- 5 765 984
- US-B1- 6 216 572

## Description

The present invention relates to a unit for feeding panels of wood or the like.

In the wood panel machining sector, it is known to provide a feeding unit comprising a lower loading surface for a panel to be fed to an operating unit adapted to machine the panels and an upper unloading surface for receiving the panel machined by the operating unit itself.

The two loading and unloading surfaces are substantially horizontal and parallel to each other and are fixed to a rectilinearly reciprocating mobile support frame in a vertical direction to move the loading surface between a lowered position and a raised position for feeding the panel to be machined to the operating unit and to move the unloading surface between a raised position and a lowered position for receiving the machined panel from the operating unit.

Since the panels to be machined are loaded one at a time onto the loading surface from a stack of panels arranged by the side of the feeding unit, the known feeding units of the above-described type are relatively cumbersome, require relatively large installation spaces and relatively high installation costs, and introduce relatively long dead timers.

Document EP-266449-A relates to a sawing machine comprising a cutting unit; a resting surface for supporting a stack of panels during operation of the cutting unit; and an upper supporting surface movable between a respective raised position for receiving the stack of panels and a respective lowered position for transferring the stack of panels onto the resting surface.

The sawing machine further comprises a lower supporting surface movable between a respective lowered position to allow movement of the upper supporting surface from its raised position to its lowered position and a respective raised position to define an extension of the resting surface while the upper supporting surface is in its raised position.

It is an object of the present invention to provide a unit for feeding panels of wood or the like which is free from the above-described drawbacks and which is simple and cost-effective to implement.

According to the present invention, there is provided a unit for feeding panels of wood or the like as claimed in claims from 1 to 10.

The present invention further relates to a method for feeding panels of wood or the like.

According to the present invention, there is provided a method for feeding panels of wood or the like as claimed in claims from 11 to 19.

A preferred non-limiting embodiment of the invention will now be described by way of example with reference to the accompanying drawings, in which:
figure 1 is a diagrammatic side view, with parts removed for clarity, of a preferred embodiment of the feeding unit of the present invention and of an operating unit associated thereto;
figure 2 is a diagrammatic side view, with parts removed for clarity, of the feeding unit of figure 1; and
figure 3 is a diagrammatic side view, with parts removed for clarity, of a detail of figure 2.

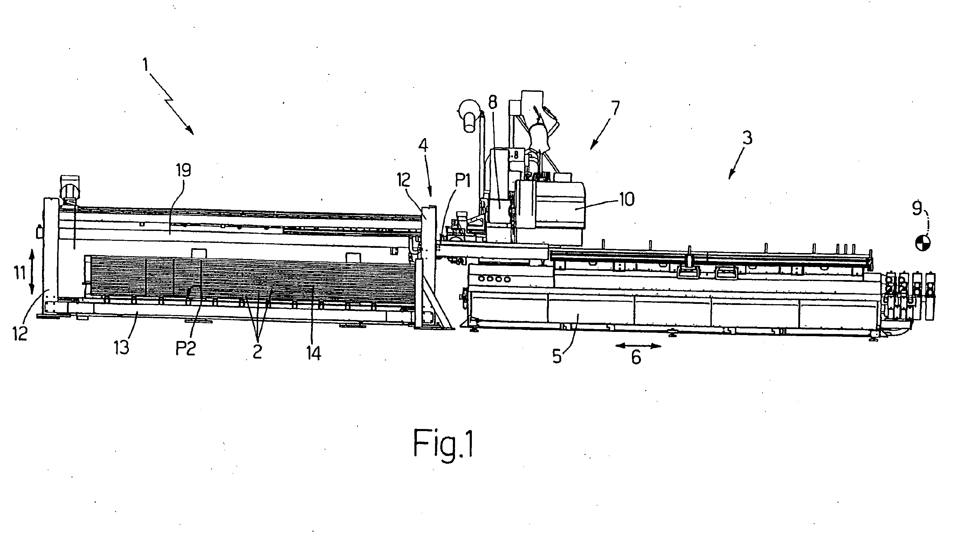

With reference to figure 1, numeral 1 indicates as a whole a feeding unit for feeding panels 2 of wood or the like to be machined to an operating unit 3 of known type and to receive the machined panels 2 from unit 3 itself.

Unit 3 is connected to unit 1 at an inlet station 4 having a resting surface P1 for panels 2, and comprises an elongated base 5, which extends in a certain direction 6, and is limited on top, in the case in point, by a supporting panel (not shown), which is commonly called a "sacrificial board", is fastened to base 5, is substantially coplanar with surface P1, and is made of air permeable material so as to allow the locking of panel 2 onto surface P1 itself.

Unit 3 further comprises a gantry 7 comprising, in turn, a vertical pillar (not shown), which is coupled in known manner to base 5 to perform rectilinear movements in direction 6, along base 5 itself and under the bias of an actuating device (known and not shown), and carries a horizontal crossmember 8 connected thereto and extending over base 5 in a direction 9 transversal to direction 6 and perpendicular to the sheet plane in figure 1.

Gantry 7 supports an operating head 10, which is coupled in a known manner to crossmember 8 to perform, along crossmember 8 itself, rectilinear movements in direction 9, and normally comprises at least one spindle of a known type and not shown, which is mounted on operating head 10 itself to be moved in a direction 11 vertical and orthogonal to directions 6 and 9, and is mobile over base 5 to allow a corresponding tool (not shown) fitted on the spindle (not shown) itself to obtain from each panel 2 a plurality of panels (not shown) of smaller dimensions than those of panel 2 itself.

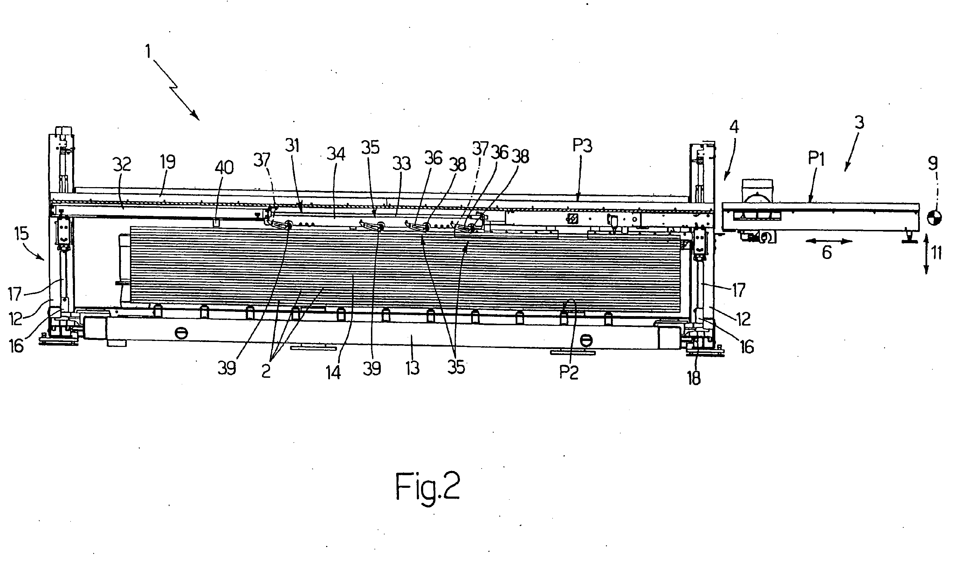

As shown in figure 2, unit 1 comprises four vertical pillars 12 (only two of which are shown in figure 2), each of which extends in direction 11 and is aligned to the two adjacent pillars 12 in directions 6 and 9.

Pillars 12 support a lower supporting plate 13, which extends between pillars 12, defines a lower loading surface P2 substantially horizontal and orthogonal to direction 11, is adapted to support a stack 14 of panels 2 reciprocally overlapping in direction 11, and is slidingly coupled to pillars 12 to perform rectilinear movements in direction 11 itself, with respect to pillars 12 themselves and under the bias of an actuating device 15.

Plate 13 presents a substantially rectangular shape, and supports four scrolls 16 at its vertexes, each of which is coupled, by means of a screw/nut-screw coupling, to a corresponding screw 17 of device 15, a motor of which (of known type and not shown) puts screws 17 into rotation by means of a chain drive 18 of a known type to give rectilinear movements in direction 11 to scrolls 16 and thus to plate 13.

Unit 1 further comprises an upper supporting plate 19, which extends between two pillars 12, defines an upper unloading surface P3 substantially parallel to surface P2, and is slidingly coupled to pillars 12 to perform rectilinear movements in direction 11 with respect to pillars 12 and according to modalities which will be illustrated in greater detail below.

Plate 19 is normally maintained in a lowered position (figure 2), in which surface P3 is substantially coplanar with surface P1, by means of four supporting blocks 20 mounted on pillars 12 to support the bottom of plate 19 itself.

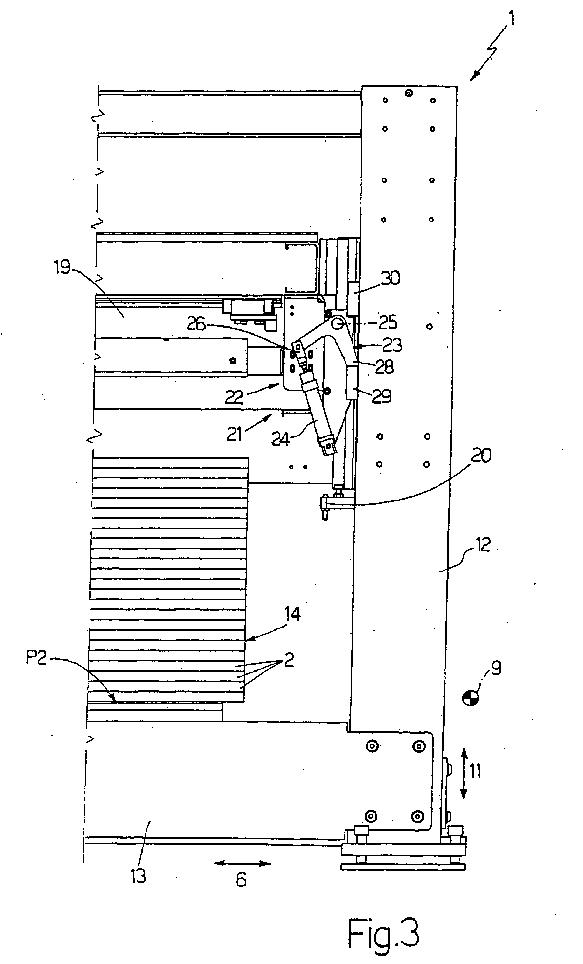

Plate 19 is mobile from its lowered position to a first raised position (figure 3), in which the distance between plate 19 and surface P1 of inlet station 4 of operating unit 3 approximates by excess the total height of panels 2 which must be fed from time to time onto surface P1 itself, and is adapted to be locked in its first raised position by means of a stop assembly 21.

With reference to figure 3, assembly 21 comprises a plurality of stop devices 22 (four stop devices 22 in the case in point), each of which is associated to a corresponding pillar 12, and comprises a rocker arm 23 hinged to plate 19 to oscillate, with respect to plate 19 and under the bias of an actuator cylinder 24, about a fulcrum axis 25 substantially parallel to direction 9.

Cylinder 24 presents an outlet rod 26, which is hinged to a first arm 27 of rocker arm 23, and is mobile between a retracted position (figure 3), in which rod 26 moves a second arm 28 of rocker arm 23 to a fastening position of a supporting block 29 fixed to corresponding pillar 12, and an extracted position (not shown), in which rod 26 moves arm 28 to a release position from block 29 itself.

Plate 19 is further mobile in a second raised position arranged over the first raised position, and is adapted to be locked in its second raised position by means of four devices 22, each of which cooperates with a supporting block 30 fastened to corresponding pillar 12 over a corresponding block 29.

Plate 19 is finally provided with a transfer assembly 31, which feeds panels 2 of stack 14 in direction 6, and cooperates with a gripping and conveying assembly of known type associated to crossmember 8 of operating unit 3 to complete the transfer of panels 2 themselves onto surface P1.

Assembly 31 comprises at least one actuator cylinder 32, which is fixed to plate 19 parallelly to direction 6, and presents a telescopic outlet rod 33 on which there is mounted a bar 34, which extends in direction 6, and supports a plurality of transfer devices 35 distributed along bar 34 itself.

Each device 35 comprises a crank 36, which is hinged to bar 34 to oscillate in a known manner, with respect to bar 34 itself, about an axis 37 of fulcrum substantially parallel to direction 9 between a raised rest position and a lowered operative position, is provided with a supporting wheel 38 adapted to be arranged in contact with upper panel 2 of stack 14, and is further provided with a pushing element 39 adapted to engage the rear edge of panels 2 to be transferred onto surface P1.

The operation of unit 1 will now be described assuming the feeding, the machining and the unloading of a single panel 2 from the moment in which:
lower plate 13 is arranged in a lowered position (figure 2);
one stack 14 of panels 2 is loaded on lower loading surface P2;
upper plate 19 is arranged in its lowered position (figure 2);
outlet rod 33 of actuator cylinder 32 is arranged in a retracted position (not shown);
transfer devices 35 are arranged in their raised rest positions;
outlet rods 26 of actuator cylinders 24 are arranged in their extracted positions; and
stop devices 22 are arranged in their release positions.

Lower plate 13 is raised by means of actuating device 15 and from its lowered position to firstly move upper panel 2 from stack 14 into contact with a plurality of supporting pads 40 protruding downwards from upper plate 19 to thus raise plate 19 itself from its lowered position to its first raised position.

At this point, outlet rods 26 of actuator cylinders 24 are moved into their retracted positions and stop devices 22 are moved into their fastening positions so as to lock plate 19 in its first raised position; plate 13 is lowered again by means of actuating device 15 and stopped in a raised position (not shown), in which panel 2 to be transferred onto surface P1 is substantially coplanar with surface P1 itself.

The transfer of panel 2 considered on surface P1 is performed by firstly moving transfer devices 35 into their lowered operative positions so as to rest wheels 38 on panel 2 and thus moving outlet rod 33 of actuator cylinder 32 into its extracted position to allow one of pushing elements 39 to engage the rear edge of panel 2 and to advance panel 2 itself in direction 6 and on surface P1.

According to a variant (not shown), transfer devices 35 are normally arranged in their lowered operative positions. When plate 13 is raised, some transfer devices 35 are engaged by upper panel 2 of stack 14 and are thus moved into their raised rest positions, while the remaining transfer devices 35 remain in their lowered operative positions to feed panel 2 in direction 6.

During the machining of the considered panel 2 by operating unit 3, plate 13 is firstly raised in direction 11 from its raised position so as to move the new upper panel 2 of stack 14 into contact with pads 40 and to allow the release of plate 19 from supporting blocks 29 and is thus lowered again to move plate 19 itself into its lowered position.

After ending the machining, machined panel 2 is unloaded in a known manner onto surface P3 and the above-described operative sequence is repeated to feed panels 2 to be machined from surface P2 onto surface P1 and to unload newly machined panels 2 from surface P1 to surface P3.

When all panels 2 from stack 14 have been machined by operating unit 3 and unloaded by feeding unit 1, plate 19 is moved by means of plate 13 to its second raised position to allow a feeding carriage of a known type and not shown to be arranged between plates 13 and 19 to load a new stack 14 of panels 2 onto lower surface P2.

From the above, it is understood that the second raised position of plate 19 depends on the maximum height of stack 14 of panels 2 which must be loaded onto lower surface P2.

According to a variant (not shown), feeding unit 1 further comprises a cavity which is obtained underneath pillars 12, opens outwards at the ground, and is adapted to accommodate therein stacks 14 of panels 2 presenting heights higher than the length of pillars 12 themselves. In this case, once stack 14 is loaded on surface P2, plate 13 is lowered into the cavity so as to lower upper panel 2 of stack 14 to a position substantially coplanar with surface P1 and to start feeding of panels 2 to operating unit 3.

As plate 19 may be locked into two fixed raised positions in direction 11 and plate 13 is mobile with respect to plate 19 with a law of motion at least partially different from the law of motion of plate 19 itself, it must be said that:
the lowered position of plate 13 is variable in direction 11 and its height from the ground gradually increases as panels 2 from stacks 14 arranged from time to time on surface P1 are fed to operating unit 3; and
the length of the outward and return strokes of plate 13 between its lowered position and its raised position gradually decrease as panels 2 of stack 14 are fed to operating unit 3 introducing relatively short dead times.

According to a variant (not shown), plate 19 is mobile between its raised positions and its lowered position under the bias of a lifting device entirely independent from plate 13 and device 15 and according to a law of motion entirely independent from the law of motion of plate 13 itself.

Feeding unit 1 thus presents relatively small dimensions and considerably reduces the interventions of personnel responsible of controlling units 1 and 3.

## Claims

1. A feeding unit for feeding panels (2) of wood or the like, the feeding unit comprising a lower loading surface (P2) for at least one panel (2) to be machined; an upper unloading surface (P3) over the lower loading surface (P2) to receive at least one panel (2) newly machined by the operating unit (3); actuator means (15) for moving the lower loading surface (P2) in a substantially vertical direction (11) and according to a first law of motion between a respective lowered position and a respective raised position for feeding at least one panel (2) to be machined to the operating unit (3) and for moving the upper unloading surface (P3) in said direction (11) and according to a second law of motion between a respective lowered position for receiving at least one panel (2) newly machined from the operating unit (3) and a respective raised position, movement of the lower loading surface (P2) in its lowered position allowing movement of the upper unloading surface (P3) in its lowered position and movement of the upper unloading surface (P3) in its raised position allowing movement of the lower loading surface (P2) in its raised position, said first and second law of motion being different to each other during at least part of the movement of the lower loading surface (P2) between its lowered and raised positions, said lower loading surface (P2) being adapted to support a stack of panels (2); and transfer means (31) to transfer the panels (2) from the lower loading surface (P2) to the operating unit (3); whereby the transfer means (31) are carried by the upper unloading surface (P3) to move in the direction (11) according to said second law of motion.

2. A feeding unit according to claim 1, wherein the raised position of the upper unloading surface (P3) is a fixed position in said direction (11) at least until the depletion of the panels (2) of the stacks (14) arranged from time to time on the lower loading surface (P2).

3. A feeding unit according to claim 1 or 2, wherein the upper unloading surface (P3) is mobile at least from its lowered position to its raised position under the bias of the lower loading surface (P2).

4. A feeding unit according to claim 3 and further comprising first stop means (21) for stopping the upper unloading surface (P3) in its raised position.

5. A feeding unit according to any of the preceding claims, wherein the upper unloading surface (P3) is mobile between its raised and lowered positions under the bias of the lower loading surface (P2).

6. A feeding unit according to claim 5 and further comprising first stop means (21) for stopping the upper unloading surface (P3) in its raised position and second stop means (20) for stopping the upper unloading surface (P3) in its lowered position.

7. A feeding unit according to claim 1 or 2, wherein said actuator means (15) comprise first actuator means (15) for moving the lower loading surface (P2) in said direction (11) between its lowered and raised positions and second actuator means independent from the first actuator means (15) for moving the upper unloading surface (P3) in said direction (11) between its lowered and raised positions.

8. A feeding unit according to any of the preceding claims, wherein the upper unloading surface (P3) is mobile in said direction (11) to a further raised position arranged over said raised position to allow the feeding of a new stack (14) of panels (2) on the lower loading surface (P2) once the panels (2) of stacks (14) arranged from time to time on the lower loading surface (P2) are depleted.

9. A feeding unit according to any of the preceding claims, wherein the upper unloading surface (P3) is substantially coplanar with a resting surface (P1) of the operating unit (3) when arranged in its lowered position.

10. A feeding unit according to any of the preceding claims, wherein the lowered position of the lower loading surface (P2) is a variable position in said direction (11) whose height gradually increases as panels (2) from stack (14) are fed to the operating unit (3).

11. A method for feeding panels (2) of wood or the like, the method comprising the steps of:
moving an upper unloading surface (P3) overlapping a lower loading surface (P2) in a substantially vertical direction (11) from a respective lowered position in a respective raised position;
moving the lower loading surface (P2) in said direction (11) from a respective lowered position to a respective raised position for feeding at least one panel (2) to be machined to an operating unit (3);
moving the lower loading surface (P2) in said direction (11) from the respective raised position to the respective lowered position;
moving the upper unloading surface (P3) in said direction (11) from the respective raised position to the respective lowered position for receiving at least one machined panel (2) from the operating unit (3);
and being **characterised in that** it further comprises the steps of:
loading at least one stack of panels (2) to be machined over the lower loading surface (P2);
moving the loading and unloading surfaces (P2, P3) between the corresponding lowered and raised positions with corresponding laws of motion, which are reciprocally different at least during part of the movement of the lower loading surface (P2) between its lowered and raised positions; and
gradually increasing the height from the ground of the lowered position of the lower loading surface (P2) as the panels (2) of the stacks (14) are fed to the operating unit (3).

12. A method according to claim 11 and further comprising the step of:
moving the upper unloading surface (P3) again in the same raised position at least until the depletion of the panels (2) of the stacks (14) arranged from time to time on the lower loading surface (P2).

13. A method according to claim 11 or 12 and comprising the further steps of:
raising the lower loading surface (P2) in said direction (11) from its lowered position so as to engage the upper loading surface (P3); and
further raising the lower loading surface (P2) so as to move the upper unloading surface (P3) from its lowered position to its raised position.

14. A method according to claim 13 and further comprising the steps of:
stopping the upper unloading surface (P3) in its raised position; and
lowering the lower loading surface (P2) to its raised position.

15. A method according to claim 14 and further comprising the steps of:
raising the lower loading surface (P2) in said direction (11) from its raised position so as to engage the upper loading surface (P3);
releasing the upper unloading surface (P3) from its raised position; and
lowering the lower loading surface (P2) so as to move the upper unloading surface (P3) from its raised position to its lowered position.

16. A method according to claim 15, and further comprising the steps of:
stopping the upper unloading surface (P3) in its lowered position; and
lowering the lower loading surface (P2) to its lowered position.

17. A method according to claim 11 or 12 and further comprising the steps of:
moving the lower loading surface (P2) in said direction (11) between its lowered and raised positions by means of a first actuating device (15); and
moving the upper unloading surface (P3) in said direction (11) between its lowered and raised positions by means of a second actuating device (15) independent from the first actuating device (15).

18. A method according to any one of claims from 11 to 17 and further comprising the steps of:
moving the upper unloading surface (P3) in a further raised position arranged over its raised position; and
feeding a new stack (14) of panels (2) on the lower loading surface (P2) once the stacks (14) arranged from time to time on the lower loading surface (P2) itself are depleted while maintaining the upper unloading surface (P3) in said further raised position.

19. A method according to one of the claims from 11 to 18 and further comprising the steps of:
transferring the panels (2) from the lower loading surface (P2) to the operating unit (3) by means of a transfer device (31); and
moving the transfer device (31) in said direction (11) according to the same law of motion as the upper unloading surface (P3).

## Patentansprüche

1. Führungs-Einheit zum Führen von Platten (2) aus Holz oder dergleichen, wobei die Führungs-Einheit aufweist eine untere Beschickungs-Fläche (P2) für mindestens eine zu bearbeitende Platte (2); eine obere Ablade-Fläche (P3) über der unteren Beschickungs-Fläche (P2), um mindestens eine Platte (2) zu empfangen, die durch die Arbeits-Einheit (3) neu bearbeitet worden ist; Aktuator-Mittel (15) zum Bewegen der unteren Beschickungs-Fläche (P2) in einer im Wesentlichen vertikalen Richtung (11) und nach einem ersten Gesetz der Bewegung zwischen einer jeweiligen abgesenkten Position und einer jeweiligen hohen Position zum Führen von mindestens einer zu bearbeitenden Platte (2) zu der Arbeits-Einheit (3) und zum Bewegen der oberen Ablade-Fläche (P3) in der Richtung (11) und nach einem zweiten Gesetz der Bewegung zwischen einer jeweiligen abgesenkten Position zum Empfangen von mindestens einer Platte (2), die von der Arbeits-Einheit (3) neu bearbeitet worden ist, und einer jeweiligen hohen Position, wobei eine Bewegung der unteren Beschickungs-Fläche (P2) in ihre abgesenkte Position eine Bewegung der oberen Ablade-Fläche (P3) in ihre abgesenkte Position erlaubt und eine Bewegung der oberen Ablade-Fläche (P3) in ihre hohe Position eine Bewegung der unteren Beschickungs-Fläche (P3) in ihre hohe Position erlaubt, wobei das erste und zweite Gesetz der Bewegung während mindestens eines Teils der Bewegung der unteren Beschickungs-Fläche (P2) zwischen ihrer abgesenkten und hohen Position zueinander unterschiedlich sind; wobei die untere Beschickungs-Fläche (P2) ausgebildet ist, um einen Stapel von Platten (2) zu tragen; und Überführungs-Mittel (31), um die Platten (2) von der unteren Beschickungs-Fläche (P2) zu der Arbeits-Einheit (3) zu überführen; wobei die Überführungs-Mittel (31) von der oberen Ablade-Fläche (P3) getragen sind, um sich in der Richtung (11) gemäß dem zweiten Gesetz der Bewegung zu bewegen.

2. Führungs-Einheit nach Anspruch 1, wobei die hohe Position der oberen Ablade-Fläche (P3) eine fixierte Position in der Richtung (11) mindestens bis zu dem Abbau der Platten (2) der Stapel (14) ist, die sich zeitweise auf der unteren Beschickungs-Fläche (P2) befinden.

3. Führungs-Einheit nach Anspruch 1 oder 2, wobei die obere Ablade-Fläche (P3) mindestens von ihrer abgesenkten Position in ihre hohe Position unter Einwirkung der unteren Beschickungs-Fläche (P2) beweglich ist.

4. Führungs-Einheit nach Anspruch 3, und ferner umfassend erste Stopp-Mittel (21) zum Stoppen der oberen Ablade-Fläche (P3) in ihrer hohen Position.

5. Führungs-Einheit nach einem der vorherigen Ansprüche, wobei die obere Ablade-Fläche (P3) zwischen ihrer hohen und abgesenkten Position unter Einwirkung der unteren Beschickungs-Fläche (P2) beweglich ist.

6. Führungs-Einheit nach Anspruch 5, und ferner umfassend erste Stopp-Mittel (21) zum Stoppen der oberen Ablade-Fläche (P3) in ihrer hohen Position und zweite Stopp-Mittel (20) zum Stoppen der oberen Ablade-Fläche (P3) in ihrer abgesenkten Position.

7. Führungs-Einheit nach Anspruch 1 oder 2, wobei die Aktuator-Mittel (15) umfassen erste Aktuator-Mittel (15) zum Bewegen der unteren Beschickungs-Fläche (P2) in der Richtung (11) zwischen ihrer abgesenkten und hohen Position und zweite Aktuator-Mittel, die unabhängig von den ersten Akuator-Mitteln (15) sind, zum Bewegen der oberen Ablade-Fläche (P3) in der Richtung (11) zwischen ihrer abgesenkten und hohen Position.

8. Führungs-Einheit nach einem der vorherigen Ansprüche, wobei die obere Ablade-Fläche (P3) in der Richtung (11) in eine noch höhere Position beweglich ist, die sich über der hohen Position befindet, um die Führung eines neuen Stapels (14) von Platten (2) auf die untere Beschickungs-Fläche (P2) zu erlauben, sobald die Platten (2) der Stapel (14), die sich zeitweise auf der unteren Beschickungs-Fläche (P2) befinden, abgebaut worden sind.

9. Führungs-Einheit nach einem der vorherigen Ansprüche, wobei die obere Ablade-Fläche (P3) im Wesentlichen koplanar mit einer Ruhe-Fläche (P1) der Arbeits-Einheit (3) ist, wenn sich diese in ihrer abgesenkten Position befindet.

10. Führungs-Einheit nach einem der vorherigen Ansprüche, wobei die abgesenkte Position der unteren Beschickungs-Fläche (P2) eine variable Position in der Richtung (11) ist, deren Höhe schrittweise so zunimmt, wie Platten (2) aus dem Stapel (14) zu der Arbeits-Einheit (3) geführt werden.

11. Verfahren zum Führen von Platten (2) aus Holz oder dergleichen, wobei das Verfahren die Schritte umfasst:
Bewegen einer oberen Ablade-Fläche (P3), die eine untere Beschickungs-Fläche (P2) überlappt, in einer im Wesentlichen vertikalen Richtung (11) von einer jeweiligen abgesenkten Position in eine jeweilige hohe Position;
Bewegen der unteren Beschickungs-Fläche (P2) in der Richtung (11) von einer jeweiligen abgesenkten Position in eine jeweilige hohe Position zum Führen von mindestens einer zu bearbeitenden Platte (2) zu einer Arbeits-Einheit (3);
Bewegen der unteren Beschickungs-Fläche (P2) in der Richtung (11) von der jeweiligen hohen Position in die jeweilige abgesenkte Position;
Bewegen der oberen Ablade-Fläche (P3) in der Richtung (11) von der jeweiligen hohen Position in die jeweilige abgesenkte Position zum Empfangen von mindestens einer bearbeiteten Platte (2) von der Arbeits-Einheit (3);
und **dadurch gekennzeichnet, dass** es ferner die Schritte umfasst:
Laden von mindestens einem Stapel der zu bearbeitenden Platten (2) auf die untere Beschickungs-Fläche (P2);
Bewegen der Beschickungs- und Ablade-Fläche (P2, P3) zwischen der entsprechenden abgesenkten und hohen Position mit entsprechenden Gesetzen der Bewegung, die wechselseitig unterschiedlich mindestens während eines Teils der Bewegung der unteren Beschickungs-Fläche (P2) zwischen ihrer abgesenkten und hohen Position sind; und
schrittweises Erhöhen der Höhe von dem Grund der abgesenkten Position der unteren Beschickungs-Fläche (P2), so wie die Platten (2) der Stapel (14) zu der Arbeits-Einheit (3) geführt werden.

12. Verfahren nach Anspruch 11, und ferner umfassend den Schritt:
Bewegen der oberen Ablade-Fläche (P3) wieder in die gleiche hohe Position zumindest bis zu dem Abbau der Platten (2) der Stapel (14), die sich zeitweise auf der unteren Beschickungs-Fläche (P2) befinden.

13. Verfahren nach Anspruch 11 oder 12, und umfassend die weiteren Schritte:
Anheben der unteren Beschickungs-Fläche (P2) in der Richtung (11) von ihrer abgesenkten Position, um mit der oberen Ablade-Fläche (P3) in Verbindung zu gelangen; und
weiteres Anheben der unteren Beschickungs-Fläche (P2), um die obere Ablade-Fläche (P3) von ihrer abgesenkten Position in ihre hohe Position zu bewegen.

14. Verfahren nach Anspruch 13, und ferner umfassend die Schritte:
Stoppen der oberen Ablade-Fläche (P3) in ihrer hohen Position; und
Absenken der unteren Beschickungs-Fläche (P2) in ihre hohe Position.

15. Verfahren nach Anspruch 14, und ferner umfassend die Schritte:
Anheben der unteren Beschickungs-Fläche (P2) in der Richtung (11) von ihrer hohen Position, um mit der oberen Ablade-Fläche (P3) in Verbindung zu gelangen;
Freigeben der oberen Ablade-Fläche (P3) von ihrer hohen Position; und
Absenken der unteren Beschickungs-Fläche (P2), um die obere Ablade-Fläche (P3) von ihrer hohen Position in ihre abgesenkte Position zu bewegen.

16. Verfahren nach Anspruch 15, und ferner umfassend die Schritte:
Stoppen der oberen Ablade-Fläche (P3) in ihrer abgesenkten Position; und
Absenken der unteren Beschickungs-Fläche (P2) in ihre abgesenkte Position.

17. Verfahren nach Anspruch 11 oder 12, und ferner umfassend die Schritte:
Bewegen der unteren Beschickungs-Fläche (P2) in der Richtung (11) zwischen ihrer abgesenkten und hohen Position durch eine erste Aktuator-Einrichtung (15); und
Bewegen der oberen Ablade-Fläche (P3) in der Richtung (11) zwischen ihrer abgesenkten und hohen Position durch eine zweite Aktuator-Einrichtung (15), die unabhängig von der ersten Aktuator-Einrichtung (15) ist.

18. Verfahren nach einem der Ansprüche 11 bis 17, und ferner umfassend die Schritte:
Bewegen der oberen Ablade-Fläche (P3) in eine noch höhere Position, die sich über der hohen Position befindet; und
Führen eines neuen Stapels (14) von Platten (2) auf die untere Beschickungs-Fläche (P2), sobald die Stapel (14), die sich zeitweise auf der unteren Beschickungs-Fläche (P2) befinden, selbst abgebaut worden sind, während die obere Ablade-Fläche (P3) in der noch höheren Position gehalten wird.

19. Verfahren nach einem der Ansprüche 11 bis 18, und ferner umfassend die Schritte:
Überführen der Platten (2) von der unteren Beschickungs-Fläche (P2) zu der Arbeits-Einheit (3) durch eine Überführungs-Einrichtung (31); und
Bewegen der Überführungs-Einrichtung (31) in der Richtung (11) gemäß dem gleichen Gesetz der Bewegung wie die obere Ablade-Fläche (P3).

## Revendications

1. Une unité d'alimentation destinée à fournir des panneaux (2) de bois ou similaire, l'unité d'alimentation comprenant une surface de chargement inférieure (P2) pour au moins un panneau (2) devant être usiné ; une surface de déchargement supérieure (P3) située au-dessus de la surface de chargement inférieure (P2) destinée à recevoir au moins un panneau (2) venant d'être usiné par l'unité de traitement (3) ; des moyens d'actionnement (15) destinés à déplacer la surface de chargement inférieure (P2) dans une direction sensiblement verticale (11) et selon une première loi de déplacement entre une position abaissée respective et une position élevée respective afin d'amener au moins un panneau (2) devant être usiné à l'unité de traitement (3) et destinés à déplacer la surface de déchargement supérieure (P3) dans ladite direction (11) et selon une seconde loi de déplacement entre une position abaissée respective permettant de recevoir au moins un panneau (2) venant d'être usiné de l'unité de traitement (3) et une position élevée respective, le mouvement de la surface de chargement inférieure (P2) dans sa position abaissée permettant le mouvement de la surface de déchargement supérieure (P3) dans sa position abaissée et le mouvement de la surface de déchargement supérieure (P3) dans sa position élevée permettant le mouvement de la surface de chargement inférieure (P2) dans sa position élevée, lesdites première et seconde lois de déplacement étant différentes l'une de l'autre au moins sur une partie du déplacement de la surface de chargement inférieure (P2) entre ses positions abaissée et élevée, ladite surface de chargement inférieure (P2) étant prévue pour soutenir une pile de panneaux (2) ; et des moyens de transfert (31) destinés à transférer les panneaux (2) depuis la surface de chargement inférieure (P2) vers l'unité de traitement (3) ; les moyens de transfert (31) étant soutenus par la surface de déchargement supérieure (P3) pour se déplacer dans la direction (11) selon ladite seconde loi de déplacement.

2. Une unité d'alimentation selon la revendication 1, la position élevée de la surface de déchargement supérieure (P3) étant une position fixe dans ladite direction (11) au moins jusqu'à l'épuisement des panneaux (2) des piles (14) agencés de temps en temps sur la surface de chargement inférieure (P2).

3. Une unité d'alimentation selon la revendication 1 ou la revendication 2, la surface de déchargement supérieure (P3) pouvant être déplacée au moins entre sa position abaissée et sa position élevée sous la sollicitation de la surface de chargement inférieure (P2).

4. Une unité d'alimentation selon la revendication 3, comprenant en outre des premiers moyens d'arrêt (21) destinés à bloquer la surface de déchargement supérieure (P3) dans sa position élevée.

5. Une unité d'alimentation selon l'une quelconque des revendications précédentes, la surface de déchargement supérieure (P3) pouvant être déplacée entre ses positions élevée et abaissée sous la sollicitation de la surface de chargement inférieure (P2).

6. Une unité d'alimentation selon la revendication 5, comprenant en outre des premiers moyens d'arrêt (21) destinés à bloquer la surface de déchargement supérieure (P3) dans sa position élevée et des seconds moyens d'arrêt (20) destinés à bloquer la surface de déchargement supérieure (P3) dans sa position abaissée.

7. Une unité d'alimentation selon la revendication 1 ou la revendication 2, lesdits moyens d'actionnement (15) comprenant des premiers moyen d'actionnement (15) destinés à déplacer la surface de chargement inférieure (P2) dans ladite direction (11) entre ses positions abaissée et élevée et des seconds moyens d'actionnement indépendants des premiers moyens d'actionnement (15) destinés à déplacer la surface de déchargement supérieure (P3) dans ladite direction (11) entre ses positions abaissée et élevée.

8. Une unité d'alimentation selon l'une quelconque des revendications précédentes, la surface de déchargement supérieure (P3) pouvant être déplacée dans ladite direction (11) vers une position élevée supplémentaire située au-dessus de ladite position élevée, de façon à permettre d'amener une nouvelle pile (14) de panneaux (2) sur la surface de chargement inférieure (P2) une fois que les panneaux (2) des piles (14) agencés de temps en temps sur la surface de chargement inférieure (P2) sont épuisés.

9. Une unité d'alimentation selon l'une quelconque des revendications précédentes, la surface de déchargement supérieure (P3) étant sensiblement coplanaire à une surface de repos (P1) de l'unité de traitement (3) lorsqu'elle est agencée dans sa position abaissée.

10. Une unité d'alimentation selon l'une quelconque des revendications précédentes, la position abaissée de la surface de chargement inférieure (P2) étant une position variable dans ladite direction (11), dont la hauteur augmente progressivement à mesure que les panneaux (2) de la pile (14) sont amenés à l'unité de traitement (3).

11. Un procédé d'alimentation de panneaux (2) de bois ou similaire, le procédé comprenant les étapes suivantes :
déplacement d'une surface de déchargement supérieure (P3) recouvrant une surface de chargement inférieure (P2) dans une direction sensiblement verticale (11) depuis une position abaissée respective vers une position élevée respective ;
déplacement de la surface de chargement inférieure (P2) dans ladite direction (11) depuis une position abaissée respective vers une position élevée respective de façon à amener au moins un panneau (2) devant être usiné à une unité de traitement (3) ;
déplacement de la surface de chargement inférieure (P2) dans ladite direction (11) depuis la position élevée respective vers la position abaissée respective ;
déplacement de la surface de déchargement supérieure (P3) dans ladite direction (11) depuis la position élevée respective vers la position abaissée respective de façon à recevoir au moins un panneau usiné (2) de l'unité de traitement (3) ;
et étant **caractérisé en ce qu'**il comprend en outre les étapes suivantes :
chargement d'au moins une pile de panneaux (2) devant être usinés au-dessus de la surface de chargement inférieure (P2) ;
déplacement des surfaces de chargement et de déchargement (P2, P3) entre les positions élevée et abaissée correspondantes, avec les lois de déplacement correspondantes, qui sont différentes l'une de l'autre sur au moins une partie du déplacement de la surface de chargement inférieure (P2) entre ses positions abaissée et élevée ; et
augmentation progressive de la hauteur par rapport au sol de la position abaissée de la surface de chargement inférieure (P2) à mesure que les panneaux (2) des piles (14) sont amenés à l'unité de traitement (3).

12. Un procédé selon la revendication 11 comprenant en outre l'étape suivante :
nouveau déplacement de la surface de déchargement supérieure (P3) dans la même position élevée au moins jusqu'à l'épuisement des panneaux (2) des piles (14) agencés de temps en temps sur la surface de chargement inférieure (P2).

13. Un procédé selon la revendication 11 ou la revendication 12 comprenant en outre les étapes suivantes :
élévation de la surface de chargement inférieure (P2) dans ladite direction (11) depuis sa position abaissée pour qu'elle vienne au contact de la surface de chargement supérieure (P3) ; et
élévation supplémentaire de la surface de chargement inférieure (P2) afin de déplacer la surface de déchargement supérieure (P3) de sa position abaissée à sa position élevée.

14. Un procédé selon la revendication 13 comprenant en outre les étapes suivantes :
blocage de la surface de déchargement supérieure (P3) dans sa position élevée ; et
abaissement de la surface de chargement inférieure (P2) vers sa position élevée.

15. Un procédé selon la revendication 14 comprenant en outre les étapes suivantes :
élévation de la surface de chargement inférieure (P2) dans ladite direction (11) depuis sa position élevée pour qu'elle vienne au contact de la surface de déchargement supérieure (P3) ;
libération de la surface de déchargement supérieure (P3) de sa position élevée ; et
abaissement de la surface de chargement inférieure (P2), de façon à déplacer la surface de déchargement supérieure (P3) depuis sa position élevée vers sa position abaissée.

16. Un procédé selon la revendication 15, comprenant en outre les étapes suivantes :
blocage de la surface de déchargement supérieure (P3) dans sa position abaissée ; et
abaissement de la surface de chargement inférieure (P2) vers sa position abaissée.

17. Un procédé selon la revendication 11 ou la revendication 12 comprenant les étapes suivantes :
déplacement de la surface de chargement inférieure (P2) dans ladite direction (11) entre ses positions abaissée et élevée au moyen d'un premier dispositif d'actionnement (15) ; et
déplacement de la surface de déchargement supérieure (P3) dans ladite direction (11) entre ses positions abaissée et élevée au moyen d'un second dispositif d'actionnement (15) indépendant du premier dispositif d'actionnement (15).

18. Un procédé selon l'une quelconque des revendications 11 à 17 comprenant en outre les étapes suivantes :
déplacement de la surface de déchargement supérieure (P3) vers une position élevée supplémentaire située au-dessus de sa position élevée ; et
fourniture d'une nouvelle pile (14) de panneaux (2) à la surface de chargement inférieure (P2) une fois que les piles (14) agencées de temps en temps sur la surface de chargement inférieure (P2) elle-même sont épuisées, tout en maintenant la surface de déchargement supérieure (P3) dans ladite position élevée supplémentaire.

19. Un procédé selon l'une quelconque des revendications 11 à 18 comprenant en outre les étapes suivantes :
transfert des panneaux (2) depuis la surface de chargement inférieure (P2) vers l'unité de traitement (3) au moyen d'un dispositif de transfert (31) ; et
déplacement du dispositif de transfert (31) dans ladite direction (11) selon la même loi de déplacement que la surface de déchargement supérieure (P3).
